# EUROPÄISCHE PATENTSCHRIFT

(11) **EP 1 157 904 B1**
(45) Veröffentlichungstag und Bekanntmachung des Hinweises auf die Patenterteilung: **21.12.2005**
(21) Anmeldenummer: 01111966.6
(22) Anmeldetag: 21.05.2001
(51) Int. Cl.: B60R 22/34, B60R 22/48, B60R 22/343, B60R 22/44

(54) **Verfahren zur Steuerung des Drehmoments an der mit einem Elektromotor gekoppelten Gurtwelle eines Gurtaufrollers**
Method for controlling the belt axle torque of a seat belt retractor driven by an electric motor.
Procédé pour contrôler le couple sur l'axe d'une ceinture de sécurité rétractée par un moteur électrique

(30) Priorität: 24.05.2000 DE 10025611
(43) Veröffentlichungstag der Anmeldung: 28.11.2001
(73) Patentinhaber: TRW Automotive Electronics & Components GmbH & Co. KG, 78315 Radolfzell (DE)
(72) Erfinder: Dürrstein, Rolf, Dr., 74321 Bietigheim (DE); Peter, Cornelius, 77815 Bühl (DE)
(74) Vertreter: Degwert, Hartmut

(56) Entgegenhaltungen:
- DE-A- 3 019 298
- US-A- 4 511 097

## Beschreibung

Die Erfindung betrifft ein Verfahren zur Steuerung des Drehmoments an der mit einem Elektromotor gekoppelten Gurtwelle eines Gurtaufrollers.

Die DE 100 18 972 offenbart einen Gurtaufroller, dessen Gurtwelle nicht durch eine Wickelfeder, sondern einen Elektromotor beaufschlagt wird. Der Elektromotor ist über einen Zahnriemen mit der Gurtwelle gekoppelt. Wird in den Elektromotor ein konstanter Strom eingespeist, so ergibt sich aus der Reibung und der Walkarbeit des Zahnriemens eine Hysterese der Gurtkräfte, die verschieden sind, wenn das Gurtband aufgerollt bzw. abgerollt wird.

US 4,511,097, die dem Oberbegriff des Anspruch 1 entspricht, offenbart einen Gurtaufroller, dessen Gurtwelle ebenfalls durch einen Elektromotor beaufschlagt wird. Es ist eine Vorrichtung vorgesehen, die erkennt, wenn sich die Gurtwelle in Abrollrichtung dreht. In diesem Fall wird die Motorspannung auf 0 Volt gesetzt, so daß keine Kraft auf das Gurtband einwirkt. Ferner ist eine Vorrichtung vorgesehen, die eine Gurtlose detektiert, sowie eine Vorrichtung, die erkennt, ob der Gurt angelegt ist. Aus den Signalen dieser beiden Vorrichtungen wird erkannt, ob die Spannung am Motor erhöht werden muß, um den Gurt aufzurollen.

Es ist ein Ziel der Erfindung, Hysteresekräfte im wesentlichen zu vermeiden, um den von dem Gurtband auf den Körper des Fahrzeuginsassen ausgeübten Druck im wesentlichen konstant zu halten.

Bei dem erfindungsgemäßen Verfahren wird das Drehmoment, das sich an einer Gurtwelle eines Gurtaufrollers entwickelt, die an einen Elektromotor gekoppelt ist, dadurch gesteuert, daß zuerst die Drehrichtung der Gurtwelle detektiert wird.

Bei einem detektierten Drehsinn der Gurtwelle in Gurtband-Abrollrichtung wird in den Elektromotor ein erster Strom eingespeist und bei einem detektierten Drehsinn der Gurtwelle in Gurtband-Aufrollrichtung wird in den Elektromotor ein zweiter Strom eingespeist. Der zweite Strom ist höher als der erste Strom, wobei sich der Wert des ersten Stroms so vom Wert des zweiten Stroms unterscheidet, daß auftretende Hysteresekräfte kompensiert werden und im wesentlichen gleiche Drehmomente an der Gurtwelle und folglich im wesentlichen gleiche Gurtkräfte entstehen, wenn das Gurtband aufgerollt bzw. abgerollt wird.

Um folglich die Gurtbandkräfte anzugleichen, wird der in den Elektromotor eingespeiste elektrische Strom so eingestellt, daß er in Aufrollrichtung erhöht und in Abrollrichtung erniedrigt wird, was im wesentlichen gleiche Drehmomente an der Gurtwelle und folglich im wesentlichen gleiche Gurtkräfte zur Folge hat, wenn das Gurtband aufgerollt bzw. abgerollt wird.

Gemäß einer vorteilhaften Ausführungsform der Erfindung wird auch ein Stillstand der Gurtwelle detektiert. Die Gurtbandkräfte, die erforderlich sind, um die Auszugslänge des Gurtbandes konstant zu halten, sind kleiner als die zum Abrollen erforderlichen Kräfte. Folglich wird, um die kleineren Kräfte zu kompensieren, in den Elektromotor ein höherer elektrischer Strom eingespeist

In einer Notfallsituation, wenn hohe Verzögerungskräfte auf das Fahrzeug wirken, wird der Körper des Fahrzeuginsassen aufgrund der an ihm angreifenden Trägheitskräfte vom Sitz fortbewegt, wobei das Gurtband mit einer Geschwindigkeit mitgezogen und abgerollt wird, die höher ist als bei normaler Bewegung des Fahrzeuginsassen. Um den Fahrzeuginsassen zu schützen, muß ein zu schnelles Abrollen des Gurtbandes vermieden werden.

Gemäß einer weiteren vorteilhaften Ausführungsform der Erfindung wird die Drehgeschwindigkeit der Gurtwelle in der Abrollrichtung gemessen und sobald ein vorbestimmter Schwellenwert der Drehgeschwindigkeit überschritten wird, wird der Auszugswiderstand des Gurtbandes dadurch erhöht, daß der in den Elektromotor eingespeiste elektrische Strom linear mit der Auszugsgeschwindigkeit erhöht wird. Erst wenn ein zweiter Schwellenwert der Drehgeschwindigkeit erreicht ist, der einem Schwellenwert des elektrischen Stromes entspricht, wird ein mechanischer Sperrmechanismus an dem Gurtaufroller aktiviert. Ansonsten wird eine Begrenzung des Gurtbandes nur mit Hilfe des Elektromotors bewirkt.

Eine vorteilhafte Anwendung des erfindungsgemäßen Verfahrens ist in einem Gurtaufroller vom Typ mit einem Rahmen, einer in dem Rahmen rotierbar gelagerten Gurtwelle und einem über einen Antriebsriemen mit der Gurtwelle gekoppelten Elektromotor, wobei die Drehrichtung ermittelt und der Motorstrom je nach ermittelter Drehrichtung angepaßt wird.

Die Erfindung wird im folgenden ausführlich mit Bezugnahme auf die angehängten Zeichnungen erläutert. In den Zeichnungen zeigen:
- Figur 1 eine Ansicht im Querschnitt eines Gurtaufrollers;
- Figur 2 eine schematische Darstellung, die die unterschiedlichen Kräfte beim Abrollen und beim Aufrollen des Gurtbandes zeigt, die eine Hysterese zur Folge haben; und
- Figur 3 eine schematische Darstellung, die die Gurtbandkraft als Funktion der Abrollgeschwindigkeit zeigt.

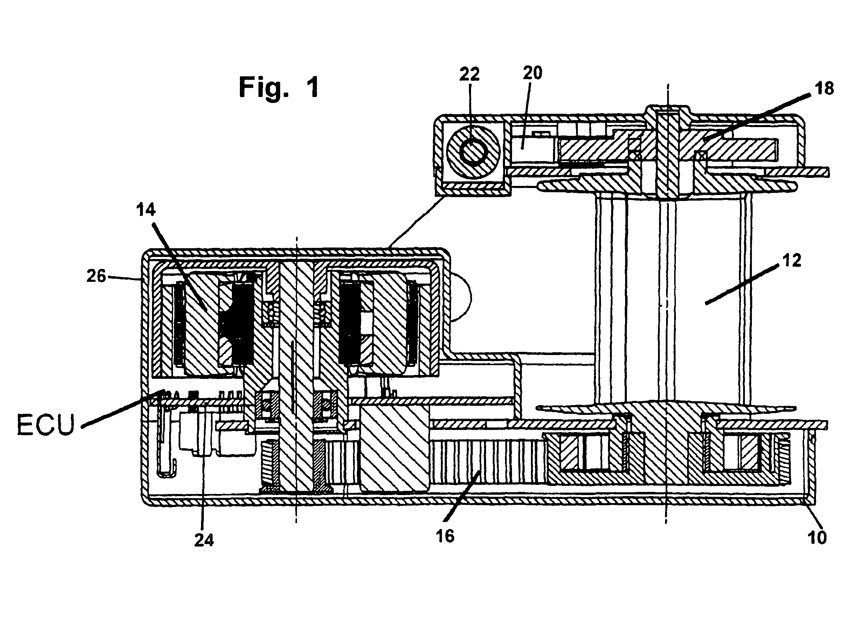

Figur 1 zeigt eine Ansicht im Querschnitt eines Gurtbandaufrollers, bei dem das erfindungsgemäße Verfahren angewendet wird.

Der Gurtbandaufroller umfaßt einen Rahmen 10, eine in dem Rahmen 10 rotierbar gelagerte Gurtwelle 12 zur Aufnahme eines Gurtbandes und einen über einen Antriebsriemen 16 mit der Gurtwelle 12 gekoppelten bürstenlosen Elektromotor 14. Der Gurtwelle 12 ist auf der dem Antriebsriemen 16 gegenüberliegenden Seite ein mechanischer Sperrmechanismus zugeordnet. Der Sperrmechanismus umfaßt ein Schaltrad 18, eine Sperrklinke 20 und einen Elektromagnet 22. In einer Notfallsituation wird die Sperrklinke 20 kontrolliert mit einer äußeren Verzahnung des Schaltrades 18 in Eingriff gebracht, so daß die Gurtwelle 12 blockiert wird.

Der Gurtaufroller umfaßt darüber hinaus eine Leiterplatte 24, die in dem Gehäuse 26 des Elektromotors 14 angeordnet ist. Die Leiterplatte 24 ist mit einem elektronischen Mikrokontroller, der einen Festwertspeicher (ROM) enthält, sowie Hall-sensoren zur Steuerung der Motorkommutierung bestückt.

Wenn der Elektromotor 14 in einem Konstantstrom-Modus betrieben wird, erzeugt ein solcher Gurtaufroller ein konstantes Drehmoment, das über den Antriebsriemen 16 die Gurtwelle 12 betätigt. Da, wenn das Gurtband abgerollt oder aufgerollt wird, Reibung und Walkarbeit des Antriebsriemens 16 je nach Bewegungsrichtung unterschiedliche Gurtbandkräfte hervorrufen, sind in einem solchen Betriebsmodus Hysterese-Effekte vorhanden.

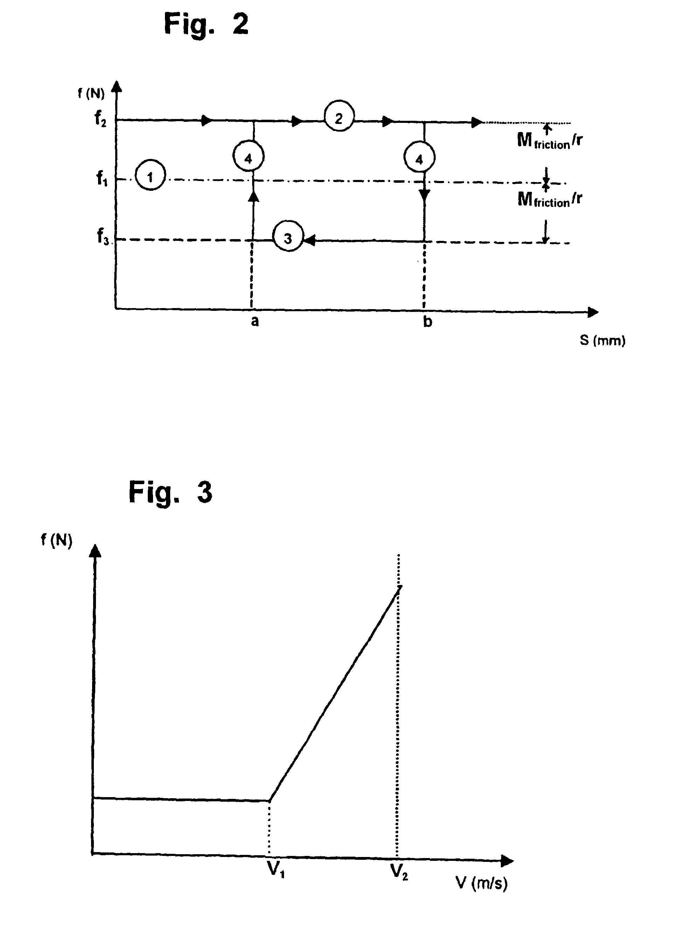

Die Situation ist in Figur 2 gezeigt, in der die Gurtbandkräfte f in Abhängigkeit davon, ob das Gurtband aufgerollt oder abgerollt wird, als Funktion der Auszugslänge S aufgetragen sind, und ausführlicher mit Bezugnahme auf die dort genannten Zahlen erläutert, die folgende Bedeutung haben:
① - Eine Kraft f₁ ist eine ideale Gurtband-Abroll-/Aufroll-Kraft, in dem Sinne, daß keine Hysterese auftritt, d.h. die Gurtbandkraft f₁ ist unabhängig von der Bewegungsrichtung des Gurtbandes. Bezeichnet man mit M_{Motor} das Antriebsmoment des Elektromotors 14, mit M_{Antrieb} das über den Antriebsriemen 16 auf die Gurtwelle 12 übertragene Drehmoment, mit M_{Reibung} das durch Reibung und Walkarbeit hervorgerufene Drehmoment, mit f die Gurtbandkraft und mit r den Hebelarm der Gurtbandkraft, die M_{Antrieb} hervorruft, so ist die Differenz zwischen einer Kraft f₂ und einer Kraft f₃ (die weiter unten erklärt werden) 2M_{Reibung}/r und f₁ = (f₂ + f₃)/2, wie in Figur 2 gezeigt ist.
② und ③ - Wird der Motorstrom konstant gehalten, ist die Gurtbandkraft f₂ beim Abrollen des Gurtbandes größer als die Gurtbandkraft f₃ beim Aufrollen.
④ - Hysteresekräfte. Die Gurtbandkraft fällt, nachdem das Gurtband mit der Kraft f₂ eine Strecke S = b ausgezogen wurde, in dem Moment auf den kleineren Wert f₃, in dem es wieder aufgerollt wird. Die Gurtbandkraft springt hingegen, nachdem das Gurtband mit der Kraft f₃ eine Strecke S = b - a aufgerollt wurde, in dem Moment auf den größeren Wert f₂, in dem es wieder abgerollt wird.

Ebenso ist die Rückhaltekraft, nachdem das Gurtband mit der Kraft f₂ eine bestimmte Strecke ausgezogen wurde und dann in dieser Position gehalten wird, kleiner als f₂.

Die gemäß der Erfindung vorgeschlagene Lösung, um die oben beschriebenen Hysterese-Effekte zu vermeiden, umfaßt im wesentlichen die folgenden zwei Schritte:
a) Ermittlung der Drehrichtung der Gurtwelle 12.
   Mit Hife der Hallsensoren zur Steuerung der Motorkommutierung wird die Drehrichtung der Gurtwelle 12 detektiert Zusätzlich wird ein Stillstand des Gurtbandes an dem Gurtaufroller erkannt, wenn der letzte Hallflankenwechsel länger als etwa eine Sekunde stabil war. In Abhängigkeit von der Drehrichtung wird die Höhe des in den Elektromotor 14 eingespeisten elektrischen Stromes wie folgt eingestellt:
b) Einstellen der Höhe des Motorstromes, um Hysterese-Effekte zu vermeiden.
   Um das Drehmoment zur Kompensierung der durch den Antriebsriemen 16 bedingten Hysterese-Effekte bereitzustellen, muß der Motorstrom angepaßt werden. Dies wird erfindungsgemäß durch eine Pulsdauermodulation erreicht. Die Werte eines ersten Motorstroms I₂ und eines zweiten Motorstroms I₃, die gleiche Gurtkräften beim Aufrollen und beim Abrollen ergeben, werden experimentell bestimmt.
   Wird eine Gurtband-Abrollbewegung detektiert, wird der erste, niedrigere Motorstrom I₂ eingestellt, indem das Tastverhältnis der Pulsdauermodulation angepaßt wird. Der so eingestellte Strom I₂ entspricht der gewünschten Gurtabrollkraft.
   Wird andererseits eine Gurtbandeinzugsbewegung ermittelt, wird das Tastverhältnis der Pulsdauermodulation auf einen Wert erhöht, der dem zweiten, höheren Motorstrom I₃ entspricht. Die Werte I₂ und I₃ werden so eingestellt, daß die an den Punkten a und b in Figur 2 auftretenden Hysteresekräfte weitgehend kompensiert werden.
   Der Motorstrom wird ebenso auf einen höheren Wert eingestellt, wenn ein Stillstand des Gurtbandes ermittelt wird.

Gemäß einer weiteren Ausführungsform der Erfindung kann für jeweils unterschiedliche Temperaturen Tᵢ eine Menge von Werten (I₂, I₃)ᵢ in dem Speicher des Mikrokontrollers abgelegt werden, um somit die Temperaturabhängigkeit der Walkarbeit und der Reibungskräfte zu berücksichtigen. Die Temperaturinformation, die der Mikrokontroller benötigt, um die entsprechende Menge von Werten (I₂, I₃) auszuwählen, so daß die Hysterese-Effekte im wesentlichen eliminiert werden, kann entweder lokal mit einem integrierten NTC-Thermistor gemessen oder über ein CAN-Bus-Interface abgefragt werden.

Gemäß einer weiteren Ausführungsform der Erfindung wird die Drehgeschwindigkeit der Gurtwelle 12 beim Abrollen gemessen, und die Höhe des in den Elektromotor 14 eingespeisten elektrischen Stromes wird erhöht, wenn ein vorbestimmter erster Schwellenwert V₁ der Drehgeschwindigkeit überschritten wird, wie es in Figur 3 gezeigt ist. Der Motorstrom I wird als Funktion der Gurtband-Abrollgeschwindigkeit V erhöht. Erst wenn ein zweiter Schwellenwert V₂ der Drehgeschwindigkeit erreicht wird, wird der mechanische Sperrmechanismus an dem Gurtaufroller aktiviert.

Anders ausgedrückt, keine Begrenzung des Gurtbandes wird eingeleitet, wenn die Drehgeschwindigkeit der Gurtwelle 12 beim Abrollen kleiner ist als V₁. Wenn der gemessene Wert der Drehgeschwindigkeit zwischen V₁ und V₂ liegt, wird die Begrenzung nur mit Hilfe des Elektromotors 14 durchgeführt. Liegt die Drehgeschwindigkeit oberhalb von V₂, wird der mechanische Sperrmechanismus aktiviert.

## Patentansprüche

1. Verfahren zur Steuerung des Drehmoments an der mit einem Elektromotor (14) gekoppelten Gurtwelle (12) eines Gurtaufrollers, wobei
- bei Drehung der Gurtwelle (12) der Drehsinn detektiert wird;
**dadurch gekennzeichnet, daß**
- bei einem detektierten Drehsinn der Gurtwelle (12) in Gurtband-Abrollrichtung in den Elektromotor (14) ein erster Strom I₂ eingespeist wird; und
- bei einem detektierten Drehsinn der Gurtwelle (12) in Gurtband-Aufrollrichtung in den Elektromotor (14) ein zweiter Strom I₃ eingespeist wird, der höher ist als der erste Strom I₂, wobei sich der Wert des ersten Stroms I₂ so vom Wert des zweiten Stroms I₃ unterscheidet, daß auftretende Hysteresekräfte kompensiert werden und im wesentlichen gleiche Drehmomente an der Gurtwelle (12) und folglich im wesentlichen gleiche Gurtkräfte entstehen, wenn das Gurtband aufgerollt bzw. abgerollt wird.

2. Verfahren nach Anspruch 1, **dadurch gekennzeichnet, daß** auch der Stillstand der Gurtwelle (12) detektiert wird und auch bei Stillstand der Gurtwelle (12) der höhere Strom eingespeist wird.

3. Verfahren nach einem der vorstehenden Ansprüche, **dadurch gekennzeichnet, daß** die Einstellung der Stromwerte unter Berücksichtigung der gemessenen Umgebungstemperatur erfolgt.

4. Verfahren nach Anspruch 3, **dadurch gekennzeichnet, daß** die temperaturabhängigen Stromwerte aus einem Festwertspeicher abgerufen werden.

5. Verfahren nach einem der vorstehenden Ansprüche, **dadurch gekennzeichnet, daß** die Drehgeschwindigkeit der Gurtwelle (12) in Abwickelrichtung detektiert wird und bei Überschreitung eines vorbestimmten Schwellenwertes der in den Elektromotor (14) eingespeiste Strom vergrößert wird.

6. Verfahren nach Anspruch 5, **dadurch gekennzeichnet, daß** der in den Elektromotor (14) eingespeiste Strom mit zunehmender Drehgeschwindigkeit der Gurtwelle (12) erhöht wird.

7. Verfahren nach Anspruch 6, **dadurch gekennzeichnet, daß** bei Erreichen eines vorbestimmten Schwellenwertes des in den Elektromotor (14) eingespeisten Stromes ein mechanischer Sperrmechanismus des Gurtaufrollers durch einen Elektromagneten aktiviert wird.

8. Verfahren nach einem der vorstehenden Ansprüche, **dadurch gekennzeichnet, daß** der Elektromotor (14) über einen Treibriemen (16) mit der Gurtwelle (12) gekoppelt ist.

9. Verfahren nach einem der vorstehenden Ansprüche, **dadurch gekennzeichnet, daß** die Detektion der Gurtwellenbewegung indirekt über Hall-Sensoren des Elektromotors (14) erfolgt.

10. Verfahren nach einem der vorstehenden Ansprüche, **dadurch gekennzeichnet, daß** die Einstellung des eingespeisten Stromes durch PulsdauerModulation erfolgt.

## Claims

1. A method of controlling the torque at the belt shaft (12) of a belt retractor coupled to an electric motor (14),
- the direction of rotation being detected upon rotation of the belt shaft (12);
**characterized in that**
- upon detection of a direction of rotation of the belt shaft (12) in the unwinding direction of the belt webbing, a first current I₂ is supplied to the electric motor (14); and
- upon detection of a direction of rotation of the belt shaft (12) in the winding direction of the belt webbing, a second current I₃ is supplied to the electric motor (14) which is higher than the first current I₂, the value of the first current I₂ differing from the value of the second current I₃ such that any hysteresis forces occurring are compensated for, and substantially identical torques at the belt shaft (12) and, hence, substantially identical belt forces are produced when the belt webbing is wound or unwound.

2. The method according to claim 1, **characterized in that** the standstill of the belt shaft (12) is also detected and the higher amount of current is supplied even when the belt shaft (12) is at a standstill.

3. The method according to either of the preceding claims, **characterized in that** the current values are set taking the ambient temperature measured into account.

4. The method according to claim 3, **characterized in that** the temperature-dependent current values are retrieved from a read-only memory.

5. The method according to any of the preceding claims, **characterized in that** the rotational speed of the belt shaft (12) is detected in the unwinding direction and the current supplied to the electric motor (14) is increased when a predetermined threshold value is exceeded.

6. The method according to claim 5, **characterized in that** the current supplied to the electric motor (14) is increased as the rotational speed of the belt shaft (12) increases.

7. The method according to claim 6, **characterized in that** a mechanical locking mechanism of the belt retractor is activated by an electromagnet when a predetermined threshold value of the current supplied to the electric motor (14) is reached.

8. The method according to any of the preceding claims, **characterized in that** the electric motor (14) is coupled to the belt shaft (12) via a drive belt (16).

9. The method according to any of the preceding claims, **characterized in that** the belt shaft motion is detected indirectly by means of Hall sensors of the electric motor (14).

10. The method according to any of the preceding claims, **characterized in that** the current supplied is set by means of pulse width modulation.

## Revendications

1. Procédé de commande du couple sur l'arbre de ceinture (12) d'un enrouleur de ceinture, accouplé à un moteur électrique (14), dans lequel
- le sens de rotation est détecté lors de la rotation de l'arbre de ceinture (12),
**caractérisé en ce que**
- lorsqu'un sens de rotation d'un arbre de ceinture (12) est détecté en direction de déroulement de la sangle de ceinture, un premier courant I₂ est amené au moteur électrique (14) ; et
- lorsqu'un sens de rotation d'un arbre de ceinture (12) est détecté en direction d'enroulement de la sangle de ceinture, un deuxième courant I₃, qui est plus élevé que le premier courant I₂, est amené au moteur électrique (14), la valeur du premier courant I₂ se distinguant du deuxième courant I₃ de telle sorte que des forces d'hystérésis se produisant sont compensées et que des couples sensiblement égaux sur l'arbre de ceinture (12) et, par conséquent, des forces de ceinture sensiblement égales se produisent lorsque la sangle de ceinture est enroulée ou déroulée.

2. Procédé selon la revendication 1, **caractérisé en ce que** l'arrêt de l'arbre de ceinture (12) est aussi détecté et que le courant plus élevé est aussi amené à l'arrêt de l'arbre de ceinture (12),.

3. Procédé selon l'une des revendications précédentes, **caractérisé en ce que** le réglage des valeurs de courant a lieu compte tenu de la température environnante mesurée.

4. Procédé selon la revendication 3, **caractérisé en ce que** les valeurs de courant dépendantes de la température sont prélevées d'une mémoire morte.

5. Procédé selon l'une des revendications précédentes, **caractérisé en ce que** la vitesse de rotation de l'arbre de ceinture (12) est détectée dans le sens de déroulement, et le courant amené au moteur électrique (14) est augmenté en cas de dépassement d'une valeur-seuil prédéterminée.

6. Procédé selon la revendication 5, **caractérisé en ce que** le courant amené au moteur électrique (14) augmente avec la vitesse de rotation croissante de l'arbre de ceinture (12).

7. Procédé selon la revendication 6, **caractérisé en ce que** lorsqu'une valeur seuil prédéterminée du courant amené au moteur électrique (14) est atteinte, un mécanisme de blocage mécanique de l'enrouleur de ceinture est activé par un électroaimant.

8. Procédé selon l'une des revendications précédentes, **caractérisé en ce que** le moteur électrique (14) est accouplé à l'arbre de ceinture par une courroie d'entraînement (16).

9. Procédé selon l'une des revendications précédentes, **caractérisé en ce que** la détection du mouvement de l'arbre de ceinture est effectuée indirectement via des capteurs de Hall du moteur électrique (14).

10. Procédé selon l'une des revendications précédentes, **caractérisé en ce que** le réglage du courant amené est effectué par modulation de durée d'impulsion.
